# EUROPEAN PATENT APPLICATION

(11) **EP 4 686 859 A2**
(43) Date of publication of application: **04.02.2026**
(21) Application number: 25193078.0
(22) Date of filing: 31.07.2025
(51) Int. Cl.: F16H 63/18, B60K 1/00

(54) **ONE-TRACK SHIFT DRUM APPARATUS AND METHODS**

(30) Priority: 31.07.2024 US 202463677936 P
(71) Applicant: Cummins Inc., Columbus, IN 47201 (US)
(72) Inventor: Grunwald, Silvia, Columbus, 47201 (US); Schrenk, Alexander, Columbus, 47201 (US)
(74) Representative: Whitfield, Jack Stephen

(57) **Abstract**

The disclosure relates to a shift drum for a transmission in an eAxle assembly. The shift drum including a body and a single guide path formed at the body and defining a shift pattern. Shift elements of a shift assembly may move along the single guide path of the shift drum to place the shift elements in a shift position. The shift positions correspond with a drive speed of the transmission. Each shift position engages a first, second, or third gearset.

## Description

### CROSS-REFERENCE TO RELATED APPLICATIONS

This application claims the benefit of priority under 35 U.S.C. § 119(e) to U.S. Provisional Application No. 63/677,936 filed on July 31, 2024, and titled "One-Track Shift Drum", the entire disclosure of which is hereby incorporated by reference in its entirety.

### FIELD

The present disclosure relates generally to a transmission geared to a plurality of gearsets via a shifting mechanism. The shifting mechanism comprises a one-track shift drum.

### BACKGROUND

Traditionally, changing gears in a transmission of a vehicle is done by mechanical linkage. A shifting mechanism comprises a shift drum and shift elements that move gears of the transmission axially into different gearsets. Known shift drums include multiple tracks, each track corresponding to a shift element such that the shift element slides in its own track causing the shift element to shift gears into various gearsets. However, these multi-track shift drums may be large, expensive to manufacture, and heavy. An improved shift drum is needed.

### SUMMARY

The present disclosure provides a shift drum for a transmission in an eAxle assembly, the shift drum comprising a body and a guide path formed at the body and defining a shift pattern, the guide path being configured to accommodate both a first guided portion of a first connected shift element and a second guided portion of a second connected shift element such that shifting the transmission causes the shift drum to guide at least one of the first and second connected shift elements to a shift position corresponding to a drive speed of the transmission, the shift position being defined along the guide path.

In one aspect, the guide path may be formed as a slot that is countered into an outer cylindrical surface of the shift drum. The slot may have a nonlinear profile. The nonlinear profile may be that of a piecewise function. Further, the slot may be continuous such that the piecewise function is a continuous piecewise function. The shift position may be one of either a plurality of first shift positions associated with the first connected shift element or a plurality of second shift positions associated with the second connected shift element. The plurality of first shift positions may comprise zero overlapping shift positions among the plurality of first shift positions. The plurality of second shift positions may comprise zero overlapping shift positions among the plurality of second shift positions. At least one overlapping shift position may exist between the plurality of first shift positions and the plurality of second shift positions.

In another aspect, the shift position may be one of a plurality of shift positions, each of which may be associated with a different transmission gear of the transmission.

The present application also provides a transmission for an eAxle assembly, the transmission comprising a plurality of gearsets each of which is associated with different transmission gear, and a shift assembly configured to shift between the plurality of gearsets between a plurality of transmission gears via a single shift drum configured to cause a plurality of shift element to move between a plurality of shift positions associated, each of which is associated with a different transmission gear of the plurality of transmission gears.

In one aspect, the shift assembly may further include first and second connected shift elements and first and second shift rails along which a respective of the first and second connected shift elements are allowed to translate when shifting between the plurality of shift positions. Each of the first and second connected shift elements may be movably connected to the single shift drum to be guided to the plurality of shift positions. The single shift drum may include a guide path along which the plurality of shift positions is defined. Each of the first and second connected shift elements may include respective guided features with which to be guided by the guide path. The guide path may be formed at a contoured slot along a cylindrical outer surface of the single shift drum. Each of the respective guide features may be formed as a protrusion from a respective of the first and second connected shift elements and received within the contoured slot. The guide path may be formed as a slot countered into an outer cylindrical surface of the single shift drum. A selected shift position in the plurality of shift positions may be one of either a plurality of first shift positions associated with the first connected shift element or a plurality of second shift positions associated with the second connected shift element. The transmission may include at least three transmission gears. The transmission may be a 3-speed transmission.

The present application further discloses a shifting method through a shift pattern of an eAxle transmission that comprises a shift assembly that includes a shift drum and first and second connected shift elements connected to the shift drum. The shifting method comprises: preforming a first movement of the shift drum to cause a corresponding movement of at least one of the first and second connected shift elements, and performing a second movement of the shift drum to causing a corresponding movement of the other of the at least one of the first and second connected shift elements. Performing the first and second movements may include moving at least one of the first and second connected shift elements to a shift position associated with a transmission gear of the eAxle transmission. Moving at least one of the first and second connected shift elements may include rotating the shift drum to cause axial movement of the at least one of the first and second connected shift elements. Performing the first movement may include moving the first connected shift element to a shift position. Performing the second movement may include moving the second connected shift element to the shift position.

### BRIEF DESCRIPTION OF THE DRAWINGS

The above-mentioned and other features and advantages of this disclosure, and the manner of obtaining them, will become more apparent, and will be better understood by reference to the following description of the exemplary embodiments taken in conjunction with the accompanying drawings, wherein:
FIGS. 1A and 1B are a side elevation, partial cutaway view of an axle assembly and a detailed view of the electric motor in FIG. 1A respectively, according to principles of the present disclosure;
FIG. 2 is a schematic of a shift assembly of the present disclosure;
FIG. 3 is an image of a shift drum of the shift assembly of the present disclosure;
FIG. 4 is a schematic of a known shift assembly;
FIG. 5 is an image of a known shift drum;
FIG. 6 is a partial side view of the shift assembly of FIG. 2;
FIG. 7 is another partial side view of the shift assembly of FIG. 2;
FIG. 8 is a partial top down view of the shift assembly of FIG. 2;
FIG. 9A is an illustration of a linear projection of an outer surface of the shift drum of FIG. 3 when the shift assembly is in neutral;
FIG. 9B is an illustration of a linear projection of an outer surface of the shift drum of FIG. 3 when the shift assembly is in first gear;
FIG. 9C is an illustration of a linear projection of an outer surface of the shift drum of FIG. 3 when the shift assembly is in second gear; and
FIG. 9D is an illustration of a linear projection of an outer surface of the shift drum of FIG. 3 when the shift assembly is in third gear.

Corresponding reference characters indicate corresponding parts throughout the several views. Although the drawings represent embodiments of various features and components according to the present disclosure, the drawings are not necessarily to scale and certain features may be exaggerated in order to better illustrate and explain the present disclosure. The exemplification set out herein illustrates an embodiment of the disclosure, and such an exemplification is not to be construed as limiting the scope of the disclosure in any manner.

### DETAILED DESCRIPTION

For the purposes of promoting an understanding of the principles of the present disclosure, reference is now made to the embodiments illustrated in the drawings, which are described below. The exemplary embodiments disclosed herein are not intended to be exhaustive or to limit the disclosure to the precise form disclosed in the following detailed description. Rather, these exemplary embodiments were chosen and described so that others skilled in the art may utilize their teachings.

A vehicle carrier assembly may include an overall transmission portion (e.g., a 3-speed transmission including an eMotor side reduction stage as well as a differential assembly that includes an axle central differential with crown and pinion set). This allows the carrier assembly to be directly assembled into the axle housing structure. The carrier assembly can support all the transmission bearing and/or shaft loads as a closed loop in this carrier assembly.

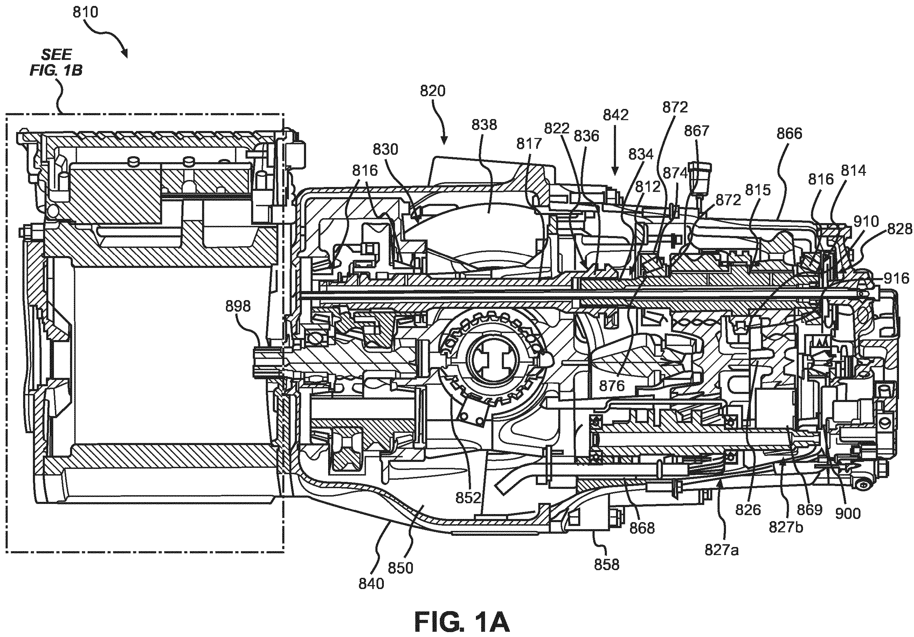

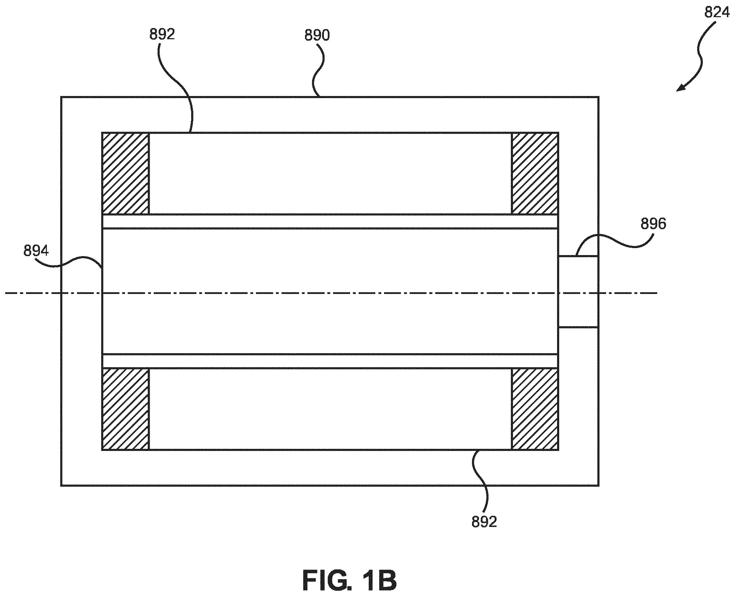

As shown in FIGS. 1A and 1B, a housing assembly 820 may receive various components of the axle assembly 810. In examples, the housing assembly 820 may include an axle housing 840 and a carrier 842. In more detail, the axle assembly 810 may include a housing assembly 820 that houses a drive pinion 812, an electric motor 824, a gearset assembly 826, a shift assembly 828, a differential assembly 830, and at least one axle shaft. The axle housing 840 may receive and support the axle shafts. The housing assembly 820 may facilitate mounting of the axle assembly 810 to the vehicle.

The electric motor 824 may be spaced apart from the axle housing 840 and may be disposed proximate the differential assembly 830. The electric motor 824 may be electrically coupled to a power source, such as a battery and/or capacitor that may provide and/or store electrical energy. For instance, an electrical connector module (not shown) may be provided with the electric motor 824 to facilitate electrical coupling. The electric motor 824 may provide torque to the drive pinion 812 when an electrical current is received. In addition, the electric motor 824 may generate electrical current in response to rotation of the drive pinion 812. For example, electrical current may be generated during regenerative braking or when the drive pinion 812 is rotated by a nonelectrical power source, such as an internal combustion engine.

In examples, the electric motor 824 may include a motor housing 890, a stator 892, a rotor 894, a coupling 896, and a driveshaft 898. The stator 892 may be fixedly disposed in the motor housing 890. The motor housing 890 may receive and/or support components of the electric motor 824. The motor housing 890 may be fixedly positioned with respect to differential assembly 830. The stator 892 may be radially disposed about an axis of rotation that may be coincident with a central axis of the driveshaft 898 and may include a plurality of windings as is known by those skilled in the art. The coupling 896 may be fixedly coupled to the driveshaft 898. For example, the coupling 896 may receive a portion of the driveshaft (e.g., at a splined portion of the driveshaft). A spline may be provided in the first coupling at a through hole that mates with a spline on the driveshaft. As such, the mating splines may cooperate to inhibit rotation of the coupling 896 with respect to the driveshaft 898. Further, one or more fasteners, such as a washer-nut combination, may be provided to inhibit axial movement of the coupling 896 with respect to the driveshaft 898. In this regard, a gear portion 899 of the driveshaft that is opposite the portion received by the first coupling can extend from the motor housing for engagement with a corresponding portion of the drive pinion.

Notably, the drive pinion is shown extending through the carrier as a cross shaft flanking the carrier and extending from a forward side (e.g., from the differential assembly to the electric motor) to the aft side of the axle assembly (e.g., from the differential assembly to the pinion, the transmission, and/or the roller bearing assembly). Under these circumstances, a central axis of a driveshaft of the electric motor can define a first axis (or a driveshaft axis) of the axle assembly. A central axis through the differential assembly along which one or more axles are received can define a second axis (or an axle shaft axis) of the axle assembly. And a central axis of the drive pinion can define a third axis (or a drive pinion axis) of the axle assembly. As shown, the first and third axes are parallelly offset and at an angle (e.g., orthogonal or oblique angle) relative to the second axis. Torque transmission from the electric motor to traction assemblies can occur along these axes (e.g., from the first axis, to the third axis, to the second axis).

One or more arm portions 852 may extend from the center portion 850. For example, two arm portions 852 may extend in opposite directions from the center portion 850 and away from the differential assembly 830. The arm portions 852 may have substantially similar configurations. For example, the arm portions 852 may each have a hollow configuration or tubular configuration that may extend around the corresponding axle shaft and may help separate or isolate the axle shaft from the surrounding environment. An arm portion 852 or a portion thereof may be integrally formed with the center portion 850. Alternatively, an arm portion 852 may be separate from the center portion 850. In such a configuration, each arm portion 852 may be attached to the center portion 850 in any suitable manner, such as by welding or with one or more fasteners. Each arm portion 852 may define an arm cavity that may receive a corresponding axle shaft. It is also contemplated that the arm portions 852 may be omitted.

The carrier 842, which may also be called a carrier housing, may be mounted to the center portion 850 of the axle housing 840. A carrier cover 866 may be disposed on an end of the carrier 842 that may be disposed opposite the axle housing 840. The carrier 842 may receive the electric motor 824 and may support the differential assembly 830 in at least one cavity 868. In addition, a carrier cover 866 may be disposed on the carrier 842. For example, the carrier cover 866 may be mounted to interior or exterior surfaces of the axle housing and/or the carrier. Under these circumstances, the carrier cover 866 may be fixedly attached in any suitable manner, such as with one or more carrier cover fasteners 90, such as bolts. The carrier cover 866 may partially define a junction box that may receive components that may facilitate electrical connections to the electric motor 824. The carrier cover 866 (also referred to herein as a differential cover 866) may be provided in various configurations.

A gearset support 869 may be integrally formed with the differential cover 866. Alternatively, the gearset support 869 may be a separate component from the differential cover 866. For example, the gearset support 869 may be a protrusion of the differential cover 866. The gearset may be attached to the differential cover 866 with a plurality of fasteners (not shown) such as bolts. For example, the fasteners may be arranged around a portion of the gearset and may extend through a portion of the gearset support 869.

Housing assembly 820 may include a cage 858 that covers at least a portion of a pinion assembly 814 to thereby form a portion of an exterior of the housing assembly. For instance, the pinion assembly can include an output shaft 815, one or more bearings 816, and a main shaft 817 that can function as a bearing support and/or a fastener. As shown, the output shaft is forward of the main shaft. The output shaft can engage the differential assembly through the plurality of selectable gearsets and a pinion assembly that is connected at a ring gear 838 of the differential assembly. The plurality of selectable gearsets may include a first and second gearsets 827a, 827b, and a third gearset. The main shaft has an exterior at which one or more bearings can be mounted. In this manner, the main shaft can function as a bearing support for the one or more bearings. As shown, the main shaft may support a roller bearing assembly that may rotatably support the drive pinion 812. For example, two bearing supports of the main shaft may be received in the cage and may be located proximate opposite sides of the main shaft of the pinion. As it relates to the fastener, the main shaft can have one or more engagement features (e.g., threads to engage a nut, collars to engage a sleeve, knurling for press or shrink fits, etc.).

The bearing support may be provided in various configurations, including different numbers of bearings, one or more sleeves arranged between the main shaft and a bearing, an outer race arranged around the bearing, and the like. When provided, the outer race can be fixedly positioned relative to the cage or otherwise may remain stationary, and the bearing elements of the bearing may rotate along one or more surfaces of the outer race.

More toward the dynamic portions of the axle assembly 810, the drive pinion 812 may provide torque to a ring gear 838 that may be provided with the differential assembly 830. The drive pinion 812 may extend along and may be rotatable about the first axis while the ring gear 838 may be rotatable about a second axis 112. In examples, the drive pinion 812 may extend through the carrier cover 866.

In examples, the drive pinion 812 may include a spline portion 834, a coupler portion 836 that together form a shaft portion 822. The coupler portion 836 may be disposed at the coupler portion 836, which may have a plurality of teeth that mate with corresponding teeth on the spline portion. The spline portion 834 may be integrally formed with the corresponding shaft or may be provided as a separate component that may be fixedly disposed on the corresponding shaft. The shaft portion 822 may extend from the e-motor side to the transmission side to be connected to a pinion assembly.

As noted above, the pinion assembly can include an output shaft 815, one or more bearings 816, and a main shaft 817 that can function as a bearing support and/or a fastener. As shown, the output shaft is forward of the main shaft. The output shaft can engage the differential assembly through the plurality of selectable gearsets and a pinion assembly that is connected at a ring gear 838 of the differential assembly. The main shaft has an exterior at which one or more bearings can be mounted. In this manner, the main shaft can function as a bearing support for the one or more bearings. As shown, the main shaft may support a roller bearing assembly that may rotatably support the drive pinion 812. For example, two bearing supports of the main shaft may be received in the cage and may be located proximate opposite sides of the main shaft of the pinion. As it relates to the fastener, the main shaft can have one or more engagement features (e.g., threads to engage a nut, collars to engage a sleeve, knurling for press or shrink fits, etc.). For instance, a preload nut 852 may be threaded onto threads and may apply a preload force on the main shaft.

The bearing support may be provided in various configurations, including different numbers of bearings, one or more sleeves arranged between the main shaft and a bearing, an outer race arranged around the bearing, and the like. When provided, the outer race can be fixedly positioned relative to the cage or otherwise may remain stationary, and the bearing elements of the bearing may rotate along one or more surfaces of the outer race. In addition, or in alternative, an outer surface of the drive pinion may extend from the coupler portion 836 and may be an outside circumference of a portion of the shaft portion 822. One or more drive pinion bearings 816 may be disposed on the outer surface and may rotatably support the drive pinion 812. The drive pinion bearings 874 may have any suitable configuration. For instance, the drive pinion bearings 874 may be configured as roller bearing assemblies that may each include a plurality of rolling elements 870 that may be disposed between an inner race 872 and an outer race 874. The inner race 872 may extend around and may be disposed on the outer surface of the drive pinion. The outer race 874 may extend around the rolling elements 870. As shown, the outer race 874 may be disposed at the cage and/or at the axle housing. One or more spacer rings 876 may be disposed between the inner races 872 of the drive pinion bearings 874 to inhibit axial movement of the drive pinion bearings 874 toward each other.

One or more bearings supports may be provided by the shaft portion 822. The bearing supports may be integrally formed with the drive pinion 812, thereby providing a unitary or one-piece construction. In the figures, two bearings are shown as supported by the shaft portion 822, although it is contemplated that one bearing support or both bearing supports may be omitted in one or more embodiments. The two bearing supports may have similar configurations. For instance, the bearing supports may be generally configured as mirror images of each other in one or more embodiments. As such, common reference numbers are used to denote features of both bearing supports.

The spline portion 834 may be disposed at a first end of the shaft portion 822 for engagement with the pinion assembly. As shown, the splines may be received by the pinion. In this regard, the coupler portion 836 may be disposed opposite the spline portion 834 for engagement with the driveshaft of the electric motor (e.g., at a corresponding gear portion of the driveshaft). The spline portion 834 may include a plurality of teeth. The teeth may be disposed substantially parallel to the first axis and may mate with corresponding splines in the pinion assembly. Alternatively, the teeth of the spline may mate with a corresponding spline of an adapter that may couple the drive pinion 812 to the pinion, as is the case with other spline-to-spline connections discussed herein.

The electric motor 824 may be operatively connected to the differential assembly 830 and may provide torque to the differential assembly 830 via the drive pinion 812. As noted above, the electric motor 824 may be spaced apart from the axle housing 840 and may be disposed proximate the differential assembly 830. The electric motor 824 may be electrically coupled to a power source, such as a battery and/or capacitor that may provide and/or store electrical energy. For instance, an electrical connector module (not shown) may be provided with the electric motor 824 to facilitate electrical coupling. The electric motor 824 may provide torque to the drive pinion 812 when an electrical current is received. In addition, the electric motor 824 may generate electrical current in response to rotation of the drive pinion 812. For example, electrical current may be generated during regenerative braking or when the drive pinion 812 is rotated by a nonelectrical power source, such as an internal combustion engine.

In another example, the electric motor 824 may be received inside the carrier 842. For example, the electric motor 824 may be received in the outer cavity 80 of the carrier 842. In addition, the electric motor 824 may be axially positioned between the carrier cover 866 and the axle housing 840. As such, the electric motor 824 may be completely received inside of the carrier 842. Positioning the electric motor 824 inside the carrier 842, as opposed to being mounted outside or to an end of the carrier 842, may help further reduce the axial length or standout of the axle assembly 810, which may reduce package space, and may position the center of mass of the axle assembly 810 closer to the axle housing 840 and the second axis 112, which may help with balancing and mounting of the axle assembly 810.

The axle shafts may transmit torque from the differential assembly 830 to corresponding traction wheel assemblies. For example, two axle shafts may be provided such that each axle shaft extends through a different arm portion 852 of axle housing 840. The axle shafts may extend along and may be rotated about the second axis by the differential assembly 830. Each axle shaft may have a first end and a second end. The first end may be operatively connected to the differential assembly 830. The second end may be disposed opposite the first end and may be operatively connected to a wheel end assembly that may have a wheel hub that may support a wheel.

A gearset can transmit torque along the first, second, and/or third axes at predetermine ratios. As shown, a gearset includes the gear portion of the drive pinion, the gear portion of the driveshaft, and optionally, a planetary gear. Planetary gearing can increase performance when handling heavy haul loads to provide optimum safety and performance in adverse conditions due to the engineering for max traction. Optionally, gear reduction may be provided between an axle shaft and a wheel.

The gearset assembly 826, if provided, may transmit torque from the electric motor 824 to the differential assembly 830. As such, the gearset assembly 826 may be operatively connected to the electric motor 824 and the differential assembly 830. A first gearset can be achieved at mating gear portions of the driveshaft and the drive pinion. For instance, at this interface, there can be a drive ratio of about 2:1 (e.g., from about +/- 1% to +/-15%). This is just one example of the many drive ratios contemplated by this disclosure. It should be noted that any drive ratio can be employed and may be influence by the particular application and/or environment in which the axle assembly is employed.

Further, central axis of the driveshaft and drive pinion can be parallelly and/or radially offset. In examples, this offset can occur via a parallelly offset gearbox. The gearset assembly 826 may be provided in various configurations, such as planetary gearset configurations and non-planetary gearset configurations. The gearset assembly 826 may be primarily received or at least partially received in a gear cavity 867 of the carrier cover 866. As such, the gearset assembly 826 may be primarily disposed outside of the carrier 842.

A shift assembly can be located between the carrier and the electric motor. The shift assembly 828 may be disposed at an end of the axle assembly 810 that may be disposed opposite the axle housing 840. For example, the shift assembly 828 may be disposed on the carrier cover 866. In at least one configuration, splines of the driveshaft may mate with corresponding splines of another component, such as a coupling or shift element that may operatively connect the driveshaft to the power source for driving the drive pinion. For instance, the shift element 910 may extend through components of the gearset assembly 826. In examples, the shift element 910 maybe operatively connected to an actuator 916. The actuator 916 may move the shift element 910 along the first axis between the first, second, and third positions. For example, the actuator 916 may be coupled to the shift element 910 with the linkage. The actuator 916 may be of any suitable type. For example, the actuator 916 may be an electrical, electromechanical, pneumatic or hydraulic actuator.

The gearset assembly 826 may cooperate with the shift assembly 828 to provide a desired gear reduction ratio to change the torque provided from the electric motor 824 to the differential assembly 830, and hence to the axle shafts of the axle assembly 810. For example, the gearset assembly 826 may provide a first drive gear ratio and a second drive gear ratio. The first drive gear ratio, which may be referred to as a low range gear ratio, may provide gear reduction from the electric motor 824 to the differential assembly 830 and hence to the axle shafts. As a nonlimiting example, the first drive gear ratio may provide a 2:1 gear ratio or more. The first drive gear ratio may provide increased torque to a vehicle traction wheel as compared to the second drive gear ratio. The second drive gear ratio, which may be referred to as a high range gear ratio, may provide a different gear reduction ratio or lesser gear reduction ratio than the first drive gear ratio. For instance, the second drive gear ratio may provide a 1:1 gear ratio. The second drive gear ratio may facilitate faster vehicle cruising or a cruising gear ratio that may help improve fuel economy. In addition, a neutral drive gear ratio or neutral position may be provided in which torque may not be provided to the differential assembly 830 by the electric motor 824.

An electronic controller may control operation of the actuator 916 and hence movement of the shift element 910. An example of shifting of the shift element 910 will now be discussed in the context of an axle assembly 810 that has a gearset assembly 826 having a planetary gear configuration. Starting with the shift element 910 in the first position, the electronic controller may receive one or more inputs that may be indicative of speed (e.g., rotational speed of the rotor 164) and/or torque (e.g., torque provided by the electric motor). Shifting of the shift element 910 from the first position to the second position or neutral position may be commenced when the speed and/or torque exceed predetermined threshold levels. Torque on the shift element 910 may be temporarily relieved or reduced by controlling the rotational speed of the electric motor so that the shift element 910 may more easily be actuated from the first position to the second position. The shift element 910 may then be actuated from the second position to the third position. More specifically, the rotational speed of the shift element 910 may be synchronized with the rotational speed of the sun gear 900 and then the actuator 916 may be controlled to move the shift element 910 from the second position to the third position. The steps may be generally reversed to move the shift element 910 from the third position to the first position. For instance, torque on the shift element 910 may be temporarily relieved or reduced to allow the shift element 910 to move from the third position to the second position and rotational speed of the shift element 910 and a corresponding gear may be synchronized to allow the shift element 910.

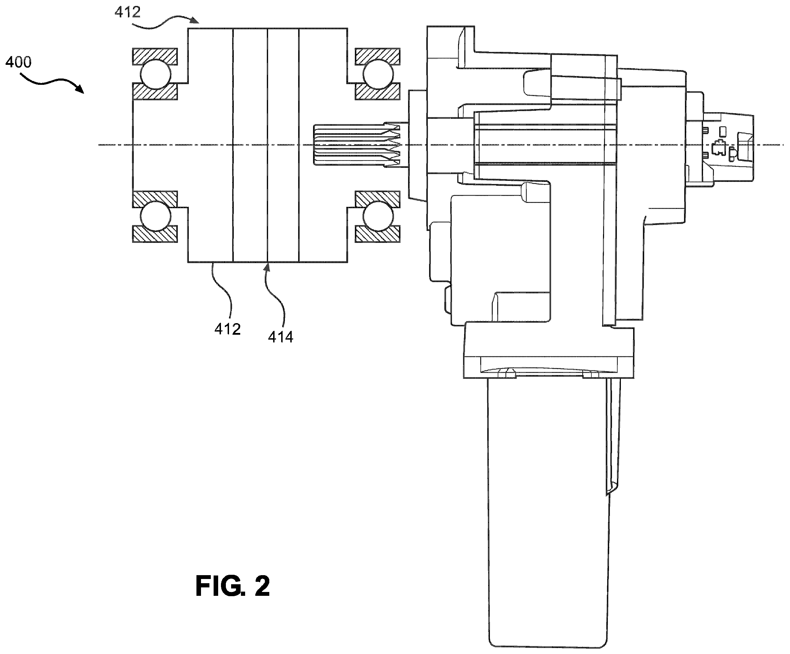

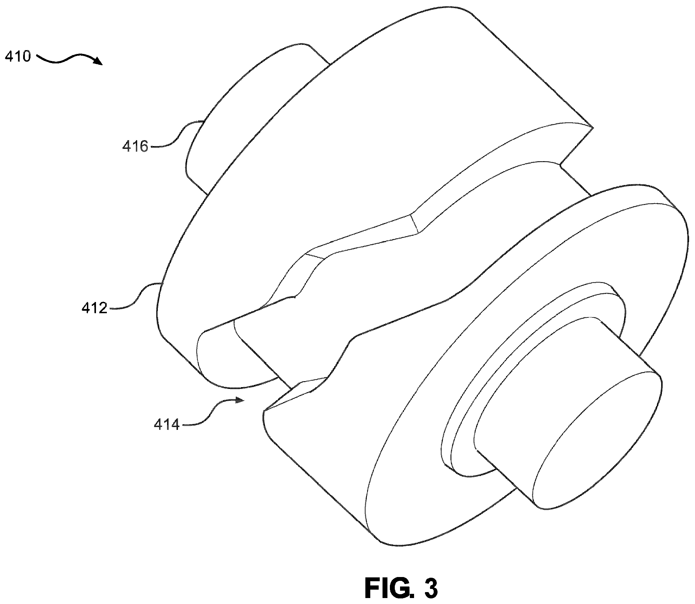

As shown in FIGS. 2 and 3, shift assembly 400 of the present disclosure may be configured to shift the plurality of gearsets between a plurality of transmission gears via a shift drum 410. The shift assembly 400 can be similar to those discussed elsewhere herein, including the shift assembly 828. For instance, as can be seen in these figures, the shift assembly 400 may comprise a shift drum, shift elements, a shift fork, and a rail to guide axial movement of the shift fork. The shift drum is rotatably mounted within the electric axle and includes a single groove or guide path for receiving the shift elements. The shift fork is slidably mounted within the electric axle and engages with the shift elements to shift gears. The rail guides the axial movement of the shift fork to ensure precise gear shifting.

The shift drum 410 may comprise a body 412, a single groove or guide path 414, and a central shift drum shaft 416. The shift drum 410 may be formed as a unitary piece. The body 412 may have a cylindrical shape and an outer surface.

The central shift drum shaft 416 may be inserted into a bearing in the shift assembly 400 such that the shift drum is mechanically connected to an electric actuator. The electric actuator rotates the shift drum 410 as the shift assembly 400 shifts between gearsets.

The single groove or guide path 414 in the drum may be formed in the body 412 such that the groove 414 forms a shift pattern. The groove 414 may be a contoured slot along the outer surface of the cylindrical drum body 412. The groove 414 may be a continuous path around a circumference of the shift drum body 412 and have a nonlinear profile across the surface of the body 412. The path of the groove 414 along the surface of the shift drum body 412 may be defined as a continuous piecewise function. The groove 414 may be configured to accommodate a guide portion of at least two shift elements, discussed further below.

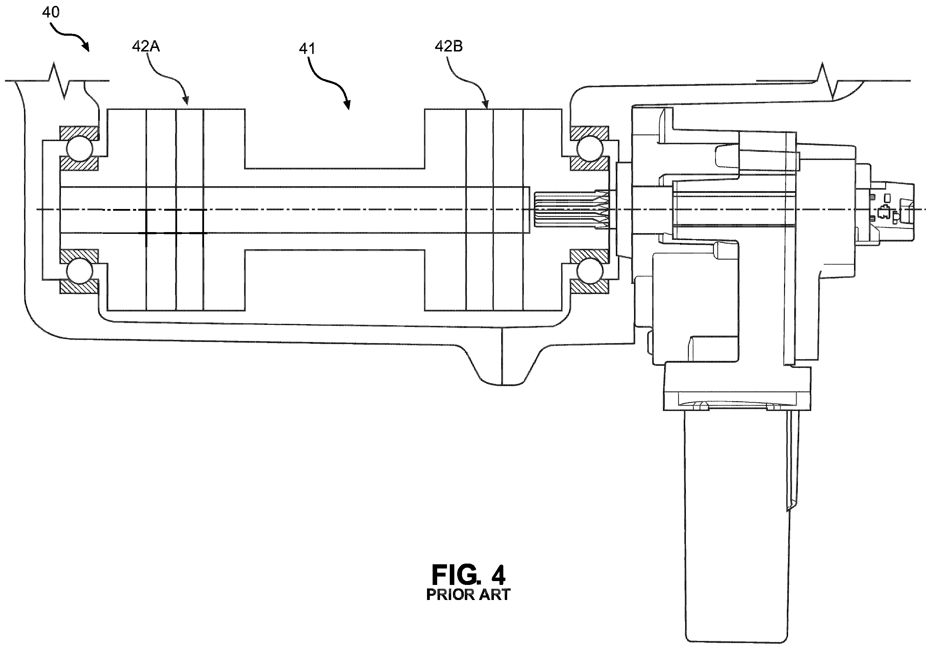

Known shift drums 41, as shown in FIGS. 3 and 4, comprise a groove 42 for each shift element. Thus, known shifting assemblies 40 comprising two shift elements comprise a shift drum 41 with two grooves 42A, 42B. This added groove makes the entire shift drum 41 longer, heavier, and more expensive/difficult to manufacture.

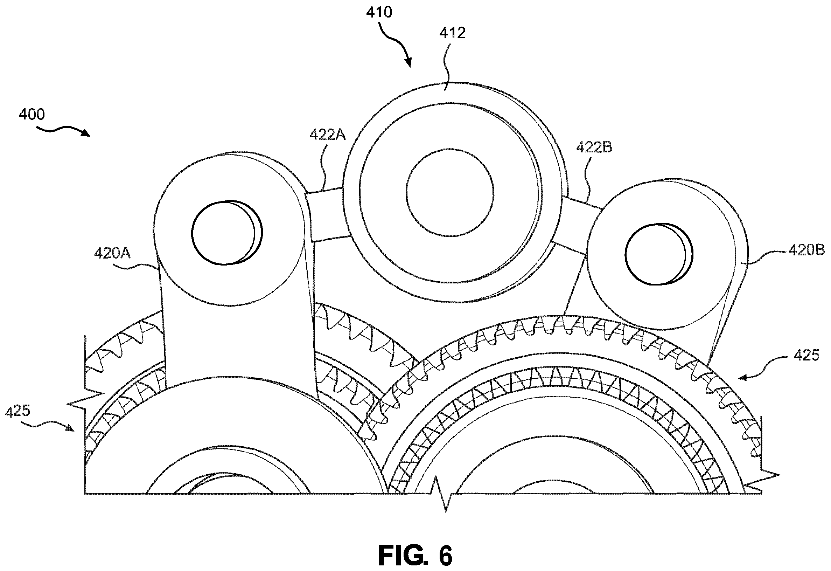

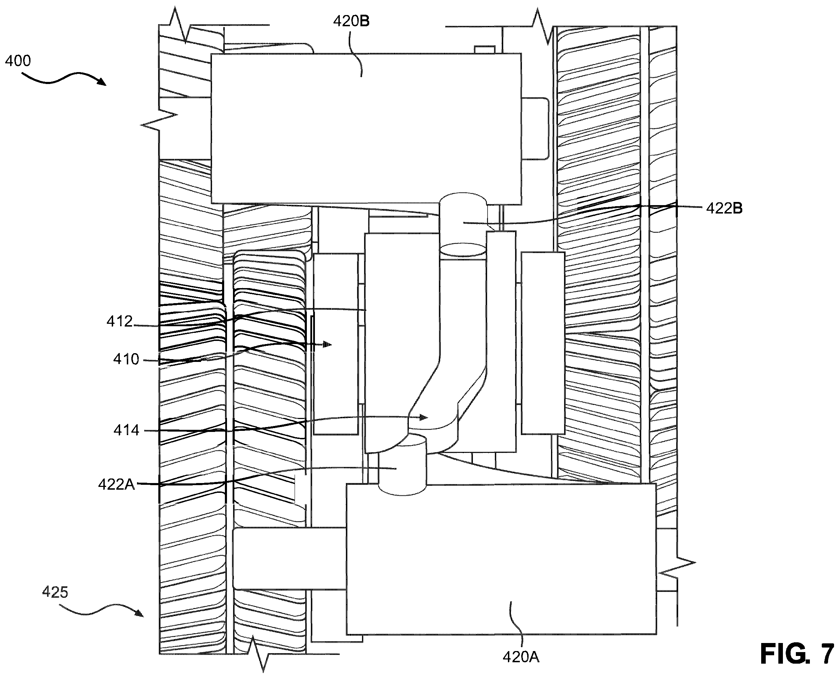

Referring to FIGS. 6-8, the shift assembly 400 of the present disclosure may comprise at least two shift elements 420A, 420B. Shift element 420A, 420B may be shifting forks or other suitable shift element. Each shift element 420A, 420B may be fixedly coupled to a series of gears 425 such that as the shift element 420A, 420B moves axially, the series of gears 425 also moves axially to mesh with the plurality of gearsets.

Each shift element 420A, 420B may comprise a protrusion 422A, 422B extending from an outer surface of the shift element 420. The protrusion 420A, 420B, may be configured to be received within the groove 414 of the shift drum 410. Each of the shift elements 420A, 420B moveably connect to the shift drum 410 via the single groove 414 such that the protrusions 422A, 422B of the shift elements 420A, 420B moveably connect to the shift drum 410 and are guided along a guide path via, e.g., a contoured track, slot, or groove 414.

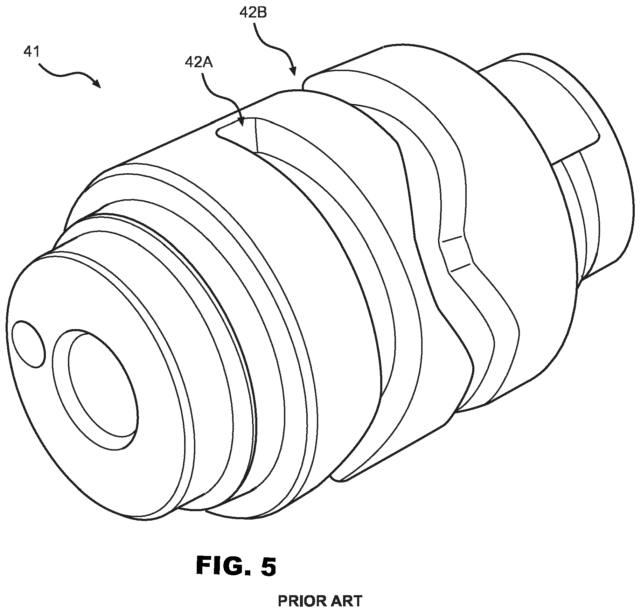

While the embodiment of FIGS. 5-8 show two shift elements 420A, 420B, alternative embodiments may comprise three, four, or five shift elements all corresponding to the single groove 414 in the shift drum 410.

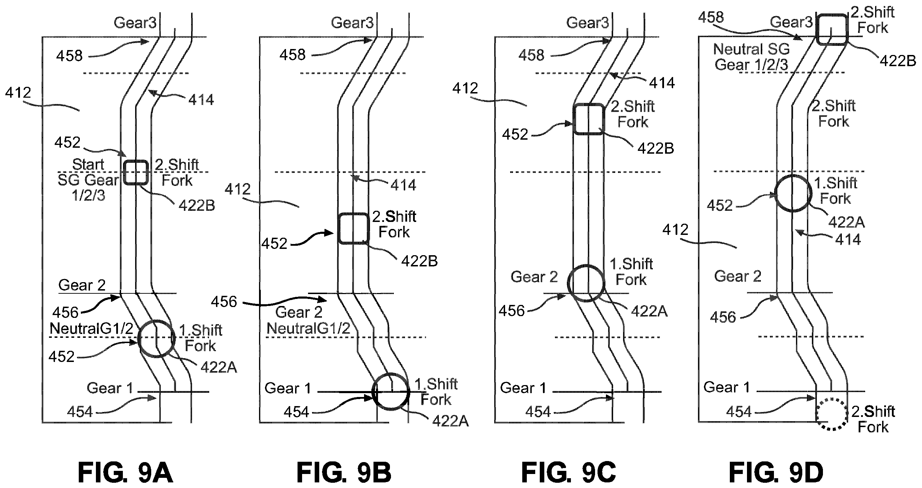

When a shifting between gearsets of a vehicle comprising the shift assembly 400 the transmission causes the shift drum 410 to guide the at least two shift elements 420A, 420B along the contoured guide path of the groove 414 such that the at least two shift elements 420A, 420B are shifted into a position corresponding to a drive speed of the transmission. The shift position is defined along the path of the groove 414, as shown in FIGS. 9A-9D. Each shift position is associated with a different transmission gearset.

FIGS. 9A-9D each show the outer surface of the shift drum body 412 of the shift drum 41 projected as a one-dimensional surface on a single plane. The guide path of the groove 414 of the shift drum 410 can be seen in a linear fashion as opposed to the two-dimensional projections of the cylindrical surface of the shift drum 410 in FIGS. 3, 6-8. The guide path of groove 414 may comprise of a plurality of shift positions, including a plurality of first shift positions, a plurality of second shift positions, a plurality of third shift positions, and a plurality of neutral shift positions.

As the shift drum 410 rotates in response to the drive speed of the transmission, the protrusions 422A, 422B slide along the path of the groove 414 and are moved axially along an axis as the protrusions 422A, 422B follow the serpentine path of the groove 414. Each shift position corresponds with a selected gearset and drive speed of the transmission. The shift position may be one of either a plurality of first shift positions associated with the first connected shift element or a plurality of second shift positions associated with the second connected shift element. There may be a neutral position 452 that does not correspond with a gearset, first position 454 that corresponds with a first gearset, a second position 456 that corresponds with a second gearset, and a third position 458 that corresponds with a third gearset. In alternative embodiments, there may be fourth, fifth, sixth, and seventh positions that correspond with additional gearsets.

For example, as shown in FIG. 9A, when the transmission is in neutral (no gearsets are engaged), the shift drum is rotated such that both the protrusion 422A of the first shift element 420A and the protrusion 422B of the second shift element 420B each fall into a neutral position 452 along the path of the groove 414. The neutral position 452 means that none of the gearsets are engaged.

As the transmission is shifted to engage the first gearset, FIG. 9B, the protrusion 422A of the first shift element 420A moves into a first gear position 454 and the protrusion 422B of the second shift element 420B stays in a neutral position 452. When the first shift element 420A moves into the first gear position 454, the gears 425 coupled to the first shift element 420A are shifted axially as the first shift element 420A slides along the groove 414 to engage with the first gearset. Since the second shift element 420B is in a neutral position 452, the gears 425 coupled to the second shift element 420B are not shifted axially to engage with any gearsets.

Similarly, in FIG. 9C, a second gearset may be engaged. As the transmission is shifted to engage the second gearset, the protrusion 422A of the first shift element 420A moves into a second gear position 456 and the protrusion 422B of the second shift element 420B stays in a neutral position 452. When the first shift element 420A moves into the second gear position 456, the gears 425 coupled to the first shift element 420A are shifted axially as the first shift element 420A slides along the groove 414 to disengage with the first gearset and engage with the second gearset. The second shift element 420B is in a neutral position 452, the gears 425 coupled to the second shift element 420B are not shifted axially to engage with any gearsets.

Finally, in FIG. 9D, a third gearset may be engaged. As the transmission is shifted to engage the third gearset, the protrusion 422B of the second shift element 420B moves into a third gear position 458 and the protrusion 422A of the first shift element 420A moves into a neutral position 452. When the second shift element 420B moves into the third gear position 458, the gears 425 coupled to the second shift element 420B are shifted axially as the second shift element 420B slides along the groove 414to engage with the gears of the third gearset. The gears 425 coupled to the first shift element 420A shift with the first shift element 420A to disengage the second gearset and move into a neutral position 452.

The shifting positions 452, 454, 456, and 458 may all be along the guide path of groove 414. The first shift position 454 may not overlap along the guide path of groove 414 with any other first shift positions. Similarly, the second shift position 456 may not overlap along the guide path of groove 414 with any other second shift positions. However, at least one shift position may overlap with at least one of the first shift position 454 and the second shift position 456. In one embodiment, the third shift position 458 overlaps with the first shift position 454. Comparing FIGS. 9B and 9D, position 454 and position 458 are substantially the same along the guide path of groove 414. However, the depending on which shift element 420A, 420B is coupled with the overlapping first and third shift position 454, 458 determines which transmission gearset is engaged.

Generally, and without reference to specific figures, the guide path may be provided by one or more grooves, channels, or slots formed on or within a body of the shift assembly in various embodiments. The grooves or slots may be arranged to collectively define the shift pattern and may be configured to guide one or more shift elements between a plurality of shift positions. In some implementations, the grooves or slots may be interconnected to form a continuous path that extends circumferentially or helically around the body. In other implementations, the grooves or slots may be discrete and non-interconnected, each defining an independent path or segment of the overall shift pattern. The guide path may therefore be continuous along its length or formed from multiple discontinuous portions that together provide the desired guidance for the shift elements. These are just some examples of the many examples disclosed herein.

In various embodiments, the groove forming the guide path may be manufactured using a range of material removal, deformation, or additive processes suitable for the selected material of the shift drum or other body of the shift assembly. The groove may be machined using conventional milling, broaching, or turning operations, including multi-axis CNC machining to accurately define complex contours. For higher volume applications, the groove may be formed during molding or casting operations, such as die casting, metal injection molding, or investment casting, which can integrate the groove geometry directly into the initial part form. Alternatively, the groove may be produced through stamping or forging in instances where the shift drum is formed from sheet or billet stock. For composite or polymeric materials, the groove may be molded into the component during primary manufacturing and refined as needed by secondary trimming or machining processes.

The dimensionality of the groove is controlled to provide reliable engagement with corresponding guided features of the mating shift elements. The groove may have a width and depth selected to receive a protrusion, roller, pin, or other guided feature on the shift element with a predetermined clearance that allows smooth sliding without excessive lateral play. For example, the groove width may exceed the width of the guided feature by a controlled tolerance in the range of approximately 0.05-0.5 mm, depending on material selection and operating conditions, to balance low friction travel with minimal backlash. The groove depth may be sufficient to fully capture the guided feature to maintain positional accuracy along the guide path, while accommodating thermal expansion, manufacturing tolerances, and expected loads.

In embodiments where the groove is contoured with a serpentine or nonlinear profile, the groove walls may be profiled or radiused to reduce contact stresses on the mating shift element and to promote smooth axial and rotational movement. Surface treatments such as nitriding, carburizing, anodizing, or application of low-friction coatings (e.g., PTFE-based coatings) may be applied to the groove surface to increase wear resistance and reduce sliding friction. In other embodiments, a hardened insert or bushing may be placed in the groove to define the bearing surface for the guided feature.

In certain examples, the groove dimensionality may vary along its length to provide different engagement conditions at different shift positions. For example, the groove may include widened dwell regions at neutral or gear-engaged positions to improve positional stability, while transition regions between shift positions may be narrowed or ramped to control the rate of axial translation of the shift element. These variations may be formed integrally during machining, molding, or additive manufacturing of the shift drum or may be subsequently imparted through secondary machining operations. These are just some examples of the many examples disclosed herein.

The groove or grooves forming the guide path interact with the guided features of the shift elements to provide smooth and controlled movement between shift positions. As the shift drum or other shift assembly component is moved relative to the housing, the guided features on the shift elements follow the defined path of the groove, translating axially to engage or disengage corresponding gearsets. The dimensional relationship of the groove to the guided features allows the shift elements to travel freely along the guide path while maintaining positional stability at each selected gear-engaged or neutral position.

In various embodiments, the groove may include dwell regions or biasing features that are positioned along the guide path to provide additional holding force when the shift elements are in stable gear-engaged or neutral positions. These dwell regions may be implemented as widened or deepened portions of the groove profile that resist displacement during operation, helping to ensure consistent gear engagement under load and vibration conditions. Transition regions between dwell regions may be configured with ramped or narrowed sections to control the rate of axial translation of the shift elements and to facilitate smooth gear changes.

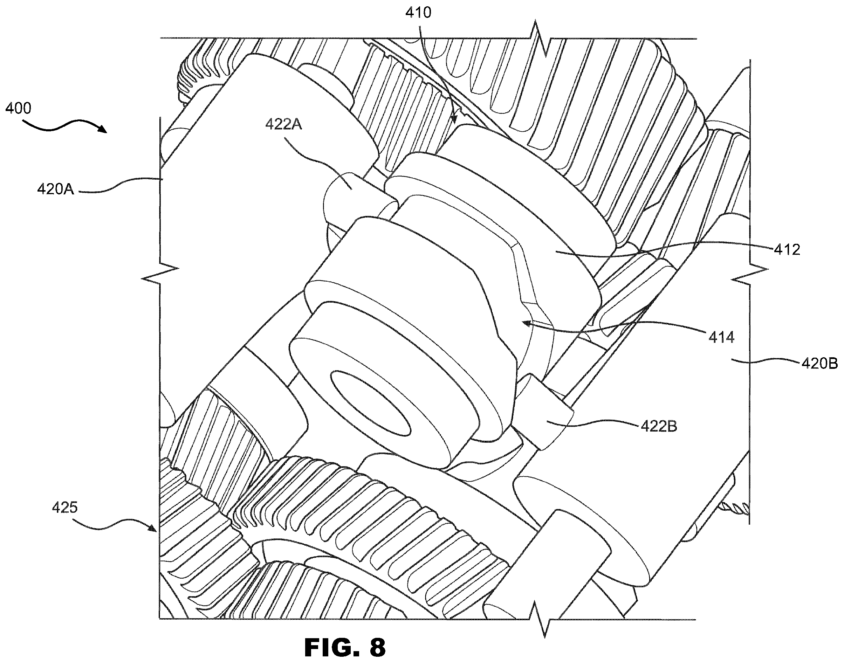

As shown in FIGS. 8A-8D, the guide path can define multiple shift positions along its length, including neutral, first gear, second gear, and third gear positions. In the illustrated embodiments, each shift element is associated with a distinct set of shift positions located at different regions of the guide path. The configurations shown in FIGS. 8A-8D are representative and may be modified without departing from the scope of the disclosure. For example, the guide path can be continuous along its length or can be formed from multiple discrete groove segments. Likewise, the groove profile and dimensionality can vary along its length to accommodate different shift element geometries, operating loads, or positional requirements.

The configurations described herein, including continuous versus discontinuous groove segments and alternative groove dimensional profiles, may be interchanged across embodiments. In other words, any of the disclosed groove shapes, surface treatments, dimensional tolerances, or dwell region configurations can be combined with any of the illustrated shift drum or shift assembly configurations. These arrangements allow flexibility to meet the packaging, manufacturing, and performance requirements of different vehicle platforms or transmission designs.

It is further contemplated that the guide path and related features may be implemented using any combination of the materials, manufacturing techniques, and geometries described elsewhere herein. The description of the guide path and its relationship to the shift elements in the illustrated embodiments is not intended to be limiting. Any configuration that positions the shift elements at discrete gear-engaged or neutral positions through controlled interaction with the guide path is considered within the scope of this disclosure.

The present disclosure further provides a shifting method through a shift pattern of an eAxle transmission as described above. The eAxle transmission may comprise a shift assembly that includes a shift drum, a first shift element, and a second shift element.

The method may comprise preforming a first movement of the shift drum to cause a corresponding movement of at least one of the first and second connected shift elements, and performing a second movement of the shift drum to causing a corresponding movement of the other of the at least one of the first and second connected shift elements.

By performing the first and second movements, at least one of the first and second connected shift elements may move to a shift position associated with a transmission gear of the eAxle transmission. Moving at least one of the first and second connected shift elements may include rotating the shift drum to cause axial movement of the at least one of the first and second connected shift elements.

Further, performing the first movement may include moving the first connected shift element to a shift position, and the second movement may include moving the second connected shift element to the shift position.

The term "movement," as used in this context, may refer to any controlled repositioning of the shift drum that causes the first shift element and/or the second shift element to travel along the guide path. In many embodiments, the movement may be a rotational displacement of the shift drum about its central axis. Such rotational movements incrementally reposition the guided portions of the shift elements along the contoured slot of the guide path and ultimately place them in their intended shift positions. In other embodiments, the movement of the shift drum may include linear displacement, either in addition to or instead of rotational motion, particularly in configurations where the guide path includes multiple discrete or non-interconnected groove segments.

The first and second movements may be executed in different ways across embodiments. In some examples, the movements may involve short, indexed rotations of the shift drum driven by an actuator that incrementally advances the shift elements to each gear-engaged or neutral position along the guide path. In other examples, the movements may be continuous rotations that carry the shift elements smoothly between positions without stopping at intermediate locations. Certain configurations may include dwell periods during the movements, in which the shift drum is temporarily held at intermediate locations to allow synchronization of rotational components or to reduce torque loads on the shift elements.

The movements themselves may be sequenced or coordinated differently based on the desired gear change strategy. For instance, the first movement may position the first shift element in a gear-engaged position while the second shift element remains in a neutral location, and the second movement may then reposition the second shift element into the same gear-engaged position or into a different gear position. In other arrangements, the first and second movements may be partially or fully overlapping, such that both shift elements are moved concurrently along the guide path. This concurrent motion can reduce shift time and may be employed in transmissions with closely spaced gear ratios or when the guide path geometry permits independent guidance of the shift elements.

In certain embodiments, additional movements beyond the first and second movements may be performed to transition the shift elements through more complex guide path geometries. For example, third, fourth, and fifth movements may be used to sequentially navigate the shift elements through one or more additional portions of the guide path. Each movement may correspond to a distinct segment or portion of the guide path, such as a dwell region, a transition region, or a region leading into a different gear-engaged position. In some examples, these additional movements may occur in series, while in other examples they may overlap partially or fully with one another or with the first and second movements. This flexibility allows the shifting method to accommodate transmissions with a greater number of gear-engaged positions and more intricate guide path layouts.

Variations of the movements may also be applied to transmissions having more than three gearsets. For example, multiple sequential movements can be used to transition the shift elements across more complex guide path geometries, particularly where additional gear-engaged positions are defined. In each embodiment, the movements are designed to achieve reliable and repeatable placement of the shift elements at discrete shift positions, whether those positions correspond to a neutral state, a partial engagement, or full engagement of a selected gearset.

The shifting method may further involve modulating the speed, torque, or direction of the movements based on sensed operating conditions of the transmission. For example, the actuator controlling the shift drum may slow or pause the movement when approaching a gear-engaged position to reduce impact loads, or may apply a holding force to maintain the shift drum in a dwell region of the guide path during torque transfer. The sequencing and control of the first and second movements may be dynamically adjusted by an electronic controller in response to inputs such as vehicle speed, electric motor torque, and driver commands. These variations allow the shifting method to be adapted to a wide range of vehicle applications and operating conditions.

The terms "may," "can," and "in various embodiments" are used throughout this specification to emphasize that the described features are examples of possible implementations rather than requirements. Statements previously phrased in negative or exclusive terms have been reframed positively to broaden support. For example, instead of stating that first shift positions "do not overlap" with second shift positions, the specification now explains that "the first shift positions are located at distinct regions of the guide path from the second shift positions."

While this disclosure has been described as having an exemplary design, the present disclosure may be further modified within the scope of this disclosure. This application is therefore intended to cover any variations, uses, or adaptations of the disclosure using its general principles. Further, this application is intended to cover such departures from the present disclosure as come within known or customary practices in the art to which this disclosure pertains.

## Claims

1. A shift drum (410) for a transmission, the shift drum comprising:
a cylindrical body (412) having an outer cylindrical surface and a central shaft (416) configured for rotational mounting within a transmission housing; and
a guide path (414) formed as a slot along the outer cylindrical surface of the cylindrical body (412), the guide path (414) being configured to guide a first shift element (420A) and a second shift element (420B) between a plurality of discrete shift positions,
wherein each discrete shift position is associated with engagement or disengagement of a transmission gear and
wherein rotation of the cylindrical body (412) about the central shaft (416) causes at least one of the first shift element (420A) and the second shift element (420B) to be positioned at a selected one of the discrete shift positions along the guide path (414).

2. The shift drum (410) of claim 1, wherein the guide path (414) is continuous along its length and defines a shift pattern that is configured to sequentially guide the first shift element (420A) and the second shift element (420B) between the discrete shift positions.

3. The shift drum (410) of claim 1 or 2, wherein the guide path (414) has a nonlinear profile, the nonlinear profile preferably being defined by a continuous piecewise function that provides controlled axial translation of the first shift element (420A) and the second shift element (420B) along the outer cylindrical surface of the cylindrical body (412) as the cylindrical body (412) rotates.

4. The shift drum (410) of any one of claims 1 to 3, wherein the guide path (414) defines first shift positions for the first shift element (420A) and second shift positions for the second shift element (420B), the first shift positions being located at distinct regions of the guide path (414) from the second shift positions,
preferably wherein at least one of the discrete shift positions is associated with both the first shift element (420A) and the second shift element (420B) at different rotational positions of the cylindrical body (412).

5. The shift drum (410) of any one of claims 1 to 4, wherein the guide path (414) is dimensioned to simultaneously receive and guide a first guided portion (422A) of the first shift element (420A) and a second guided portion (422B) of the second shift element (420B), the first guided portion (422A) and the second guided portion (422B) preferably comprising protrusions, rollers or pins extending from the respective shift elements (420A, 420B).

6. The shift drum (410) of any one of claims 1 to 5, wherein the guide path (414) comprises dwell regions or ramped transition regions, the dwell regions or ramped transition regions being configured to maintain the first shift element (420A) and the second shift element (420B) in gear-engaged or neutral positions and to facilitate smooth movement therebetween.

7. The shift drum (410) of any one of claims 1 to 6, wherein each of the first shift element (420A) and the second shift element (420B) comprises a guided feature (422A, 422B) that is slidably received in the guide path (414) such that axial translation of the first shift element (420A) and the second shift element (420B) is controlled by rotation of the cylindrical body (412).

8. A transmission (828) comprising:
the shift drum (410) of any one of claims 1 to 7;
a plurality of gearsets (826), each gearset (826) corresponding to a respective transmission gear; and
the first shift element (420A) and the second shift element (420B) being arranged such that engagement of a selected one of the plurality of gearsets (826) is controlled by the position of the first shift element (420A) and/or the second shift element (420B) along the guide path (414).

9. The transmission (828) of claim 8, wherein the shift drum (410) is coupled to an actuator (916), preferably an electric actuator, the actuator (916) being configured to rotate the cylindrical body (412) of the shift drum (410) in discrete indexed increments and to hold the cylindrical body (412) at a selected rotational position during torque transfer conditions.

10. The transmission (828) of claim 8 or 9, wherein the plurality of gearsets (826) includes at least three gearsets and the discrete shift positions include at least a neutral position and three gear-engaged positions, each gear-engaged position corresponding to engagement of a respective one of the plurality of gearsets (826).

11. An electronic axle assembly (810) comprising:
the transmission (828) of any one of claims 8 to 10;
a housing (820) defining an internal cavity, the housing (820) enclosing the plurality of gearsets (826), the first shift element (420A), the second shift element (420B), the shift drum (410) and the actuator (916); and
an electronic controller configured to provide control signals to the actuator (916) to control movement of the first shift element (420A) and the second shift element (420B) via the shift drum (410).

12. The electronic axle assembly (810) of claim 11, wherein the actuator (916) is mounted to the housing (820) in a fixed position relative to the shift drum (410) and is operatively coupled to the central shaft (416) of the cylindrical body (412) of the shift drum (410).

13. The electronic axle assembly (810) of claim 11 or 12, wherein the electronic controller is configured to modulate the timing, speed or direction of rotation of the shift drum (410) to coordinate engagement of the plurality of gearsets (826) during a gear change.

14. A method of shifting a transmission (828) comprising the shift drum (410) of any one of claims 1 to 7, the transmission (828) of any one of claims 8 to 10 or the electronic axle assembly (810) of any one of claims 11 to 13, the method comprising:
rotating the shift drum (410) to a first rotational position to guide the first shift element (420A) along the guide path (414) to a first discrete shift position associated with engagement of a first transmission gear; and
rotating the shift drum (410) to a second rotational position to guide the second shift element (420B) along the guide path (414) to a second discrete shift position associated with engagement of a second transmission gear.

15. The method of claim 14, wherein rotating the shift drum (410) comprises one or more additional movements beyond the first and second rotational positions to navigate other portions of the guide path (414), the additional movements preferably including third, fourth or further rotational movements and/or dwell periods at intermediate positions to allow synchronization of gear components or management of torque transfer.
